# EUROPÄISCHE PATENTANMELDUNG

(11) **EP 0 880 217 A2**
(43) Veröffentlichungstag der Anmeldung: **25.11.1998**
(21) Anmeldenummer: 98109038.4
(22) Anmeldetag: 18.05.1998
(51) Int. Cl.: H02K 7/18

(54) **Baueinheit aus Verbrennungsmotor, Generator und Pumpenaggregat**

(30) Priorität: 22.05.1997 DE 19721527
(71) Anmelder: STILL GMBH, D-22113 Hamburg (DE)
(72) Erfinder: Schröder, Werner-Georg, Dipl.-Ing., 63762 Grossostheim (DE); Schäfer, Arno, Dipl.-Ing., 22119 Hamburg (DE); Tügel, Caspar, Dipl.-Ing., 20253 Hamburg (DE)
(74) Vertreter: Kasseckert, Rainer

(57) **Zusammenfassung**

Gegenstand der Erfindung ist eine Baueinheit aus einem Verbrennungsmotor, einem mittels des Verbrennungsmotors antreibbaren elektrischen Generator und einem mittels des Verbrennungsmotors antreibbaren Pumpenaggregat. Erfindungsgemäß ist das Generatorgehäuse (4) derart gestaltet und ist das Pumpenaggregat (10) derart an dem Generatorgehäuse (4) angeordnet, daß ein mittels des Pumpenaggregats (10) erzeugter Flüssigkeitsstrom einen Kühlmittelstrom für den Generator darstellt. Kanäle und/oder Leitungen, die das Pumpenaggregat (10) mit dem Generatorgehäuse (4) verbinden, sind zumindest teilweise innerhalb des Generatorgehäuses (4) angeordnet. Gemäß einer Ausgestaltung sind die Kanäle und/oder Leitungen vollständig innerhalb des Generatorgehäuses (4) angeordnet. In einer Weiterbildung ist das Pumpenaggregat (10) als Hydraulikpumpe ausgebildet und ist als Kühlmittel Hydrauliköl vorgesehen.

## Beschreibung

Die Erfindung betrifft eine Baueinheit aus einem Verbrennungsmotor, einem mittels des Verbrennungsmotors antreibbaren elektrischen Generator und einem mittels des Verbrennungsmotors antreibbaren Pumpenaggregat.

Baueinheiten dieser Art werden häufig in Fahrzeugen verwendet. Die Drehbewegung einer Kurbelwelle des Verbrennungsmotors wird hierbei direkt oder indirekt in einen elektrischen Generator und in ein Pumpenaggregat eingeleitet. Mittels des Generators wird elektrische Energie erzeugt, die beispielsweise einem elektrischen Fahrantriebsmotor des Fahrzeugs zugeführt wird. Das Pumpenaggregat kann beispielsweise als Kühlwasserpumpe oder als Hydraulikölpumpe ausgeführt sein.

Beispielsweise aus der EP 0 666 634 A1 ist es bekannt, eine Kühlwasserpumpe teilweise innerhalb eines Generatorgehäuses anzuordnen. Hierbei weist das Generatorgehäuse im Bereich einer Ständerwicklung des Generators Kühlwasserkanäle auf, die mit einem Druckanschluß und einem Sauganschluß der Kühlwasserpumpe über Rohr- bzw. Schlauchleitungen verbunden sind. Diese Leitungen erfordern einen erheblichen Bauaufwand und können darüber hinaus durch äußere mechanische Einflüsse beschädigt werden.

Der vorliegenden Erfindung liegt daher die Aufgabe zugrunde, eine gattungsgemäße Baueinheit zur Verfügung zu stellen, die einen geringen Bau- und Montageaufwand erfordert und wenig anfällig gegenüber Beschädigungen durch äußere Einflüsse ist.

Diese Aufgabe wird erfindungsgemäß dadurch gelöst, daß das Generatorgehäuse derart gestaltet ist und das Pumpenaggregat derart an dem Generatorgehäuse angeordnet ist, daß ein mittels des Pumpenaggregats erzeugter Flüssigkeitsstrom einen Kühlmittelstrom für den Generator darstellt, wobei Kanäle und/oder Leitungen, die das Pumpenaggregat mit dem Generatorgehäuse verbinden, zumindest teilweise innerhalb des Generatorgehäuses angeordnet sind.

Der Montageaufwand für die Baueinheit wird hierdurch bei einer verringerten Anzahl der Bauteile erheblich vermindert. Darüber hinaus sind die innerhalb des Generatorgehäuses befindlichen Kanäle oder Leitungen vor äußeren mechanischen Einflüssen geschützt.

Eine zweckmäßige Ausgestaltung der Erfindung besteht darin, daß das Pumpenaggregat zumindest teilweise innerhalb eines Generatorgehäuses angeordnet ist.

Mit besonderem Vorteil sind die Kanäle und/oder Leitungen, die das Pumpenaggregat mit dem Generatorgehäuse verbinden, vollständig innerhalb des Generatorgehäuses angeordnet.

Gemäß einer vorteilhaften Weiterbildung der Erfindung ist das Pumpenaggregat als Hydraulikpumpe ausgebildet und ist als Kühlmittel Hydrauliköl vorgesehen. Mit der Hydraulikpumpe werden verschiedene Zusatzaggregate des Fahrzeugs, z.B. eine hydraulische Lenkkraftunterstützungsvorrichtung oder eine Hubvorrichtung eines Flurförderzeugs, mit Hydrauliköl versorgt. Zusätzlich wird erfindungsgemäß das Hydrauliköl als Kühlmittel für den elektrischen Generator verwendet.

Vorteilhafterweise ist das Pumpenaggregat in einer Einbuchtung des Generatorgehäuses angeordnet.

Zweckmäßig ist es, wenn das Generatorgehäuse einen Deckel aufweist, der die Einbuchtung des Generatorgehäuses verbrennungsmotorseitig flüssigkeitsdicht abschließt.

Gleichermaßen zweckmäßig ist es weiterhin, wenn das Generatorgehäuse einen Deckel aufweist, der die Einbuchtung des Generatorgehäuses auf der dem Verbrennungsmotor entgegengesetzten Seite flüssigkeitsdicht abschließt. Die Einbuchtung des Generatorgehäuses ist somit nach allen Seiten dicht abgeschlossen. Ein Deckel oder beide Deckel können an dem Pumpenaggregat befestigt sein. Vorteilhaft ist es hierbei, wenn der bzw. die Deckel gleichzeitig ein Gehäuseteil des Pumpenaggregats darstellen.

Eine besonders zweckmäßige Weiterbildung der Erfindung besteht darin, daß das Pumpenaggregat innerhalb der Einbuchtung des Generatorgehäuses angeordnet ist und der innerhalb der Einbuchtung vorhandene Leerraum von dem Flüssigkeitsstrom durchströmt wird. Das innerhalb der Einbuchtung, zwischen den beiden Deckeln vorhandene Volumen ist größer als das Pumpenaggregat. Es verbleibt somit innerhalb der Einbuchtung ein Freiraum, der von dem mit dem Pumpenaggregat erzeugten Flüssigkeitsstrom durchströmt wird.

Hierbei ist es vorteilhaft, wenn der auf der dem Verbrennungsmotor entgegengesetzten Seite angeordnete Deckel einen Sauganschluß und einen Druckanschluß für den mit dem Pumpenaggregat erzeugten Flüssigkeitsstrom aufweist. Der Flüssigkeitsstrom wird unter Druck aus dem Gehäuse des Generators heraus, beispielsweise zu einem Wärmetauscher und/oder zu hydraulischen Verbrauchern, geleitet und zumindest annähernd drucklos zurückgeführt. Die Anschlüsse befinden sich, gut zugänglich, an einem die Einbuchtung des Generatorgehäuses abschließenden Deckel.

Zweckmäßigerweise mündet der an dem Deckel befindliche Druckanschluß direkt in eine Drucköffnung des Pumpenaggregats. Die Drucköffnung des Pumpenaggregats geht somit ohne Umwege in den am Deckel angeordneten Druckanschluß über. Somit werden Verluste in der Druckleitung des Pumpenaggregats vermieden, ebenso wie mögliche Leckagestellen.

Mit besonderem Vorteil mündet der an dem Deckel befindliche Sauganschluß in den zwischen den beiden Deckeln befindlichen Leerraum. Durch den Sauganschluß am Deckel fließt die zumindest annähernd drucklose Flüssigkeit zunächst in den Leerraum innerhalb der Einbuchtung des Generatorgehäuses. Aus diesem Leerraum wird die Flüssigkeit durch eine Saugöffnung des Pumpenaggregats angesaugt.

Zweckmäßig ist es, wenn in dem Leerraum Mittel zum Leiten der Richtung des Flüssigkeitsstroms angeordnet sind. Hierfür können beispielsweise Strömungsleitbleche und/oder Turbulatoren verwendet werden.

In einer Weiterbildung der Erfindung ist ein die Drehbewegung einer Kurbelwelle des Verbrennungsmotors auf eine Eingangswelle des Pumpenaggregats übertragendes Verbindungsstück vorgesehen. Das Pumpenaggregat wird über dieses Verbindungsstück von dem Verbrennungsmotor angetrieben.

Hierbei ist es von besonderem Vorteil, wenn das Verbindungsstück mit Mitteln zum Ausgleichen von radialen und/oder axialen Toleranzen und/oder von Winkelverschiebungen versehen ist. Die Drehbewegung einer Kurbelwelle eines Verbrennungsmotors ist mit statischen und dynamischen Toleranzen behaftet. Hierbei treten axiale und radiale Verschiebungen der Kurbelwellenachse, wie auch Winkelabweichungen auf. Durch das Verbindungsstück können diese Abweichungen gegenüber der Eingangswelle des Pumpenaggregats ausgeglichen werden. Als Verbindungsstück kann beispielsweise in Kreuzgelenk vorgesehen werden.

Mit besonderem Vorteil ist das Verbindungsstück als Zwischenwelle ausgebildet, die, vorzugsweise beidseitig, mit axialem und radialem Spiel gelagert. Mit der einfachen und kostengünstigen Zwischenwelle werden die auftretenden Toleranzen und Verschiebungen zuverlässig ausgeglichen.

Vorteilhafterweise sind die Lagerstellen der Zwischenwelle mit der von dem Pumpenaggregat geförderten Flüssigkeit geflutet. Eine optimale Schmierung des Verbindungsstücks und dessen Verbindungsstellen zur Kurbelwelle und zum Pumpenaggregat ist somit gewährleistet.

Zweckmäßig ist es weiterhin, wenn nach einem Entfernen der die Einbuchtung abschließenden Deckel und des Pumpenaggregats, Befestigungselemente für einen Läufer des Generators an einer Kurbelwelle des Verbrennungsmotors durch die Einbuchtung hindurch zugänglich sind. Bei der Montage der Baueinheit kann zunächst der Läufer des Generators mit der Kurbelwelle des Verbrennungsmotors verschraubt werden. Die Schrauben sind hierbei durch die Einbuchtung des Generatorgehäuses hindurch zugänglich. Anschließend kann die Einbuchtung mit den Deckeln verschlossen und das Pumpenaggregat montiert werden.

Mit besonderem Vorteil ist der Generator als Außenläufer-Generator ausgebildet.

Hierbei ist es besonders vorteilhaft, wenn eine Statorwicklung an einer Wandung des Generatorgehäuses befestigt ist, deren Rückseite den mit dem Pumpenaggregat erzeugten Flüssigkeitsstrom begrenzt. Der Flüssigkeitsstrom führt somit über die Wandung des Generatorgehäuses Wärme aus der Statorwicklung ab.

In einer besonders zweckmäßigen Ausführungsform ist die Statorwicklung an einer Wandung des Generatorgehäuses befestigt, die gleichzeitig eine Wandung der Einbuchtung des Generatorgehäuses darstellt. Die Wärmeenergie wird hierbei direkt von dem in der Einbuchtung vorhandenen Strom abgeführt. Zusätzliche Kühlmittelkanäle im Generatorgehäuse sind hierbei nicht erforderlich.

Weitere Vorteile und Einzelheiten der Erfindung werden anhand des in der schematischen Figuren dargestellten Ausführungsbeispiels näher erläutert. Dabei zeigt
- Figur 1: einen Längsschnitt durch eine erfindungsgemäße Baueinheit,
- Figur 2: die erfindungsgemäße Baueinheit mit Blick von der Pumpenseite.

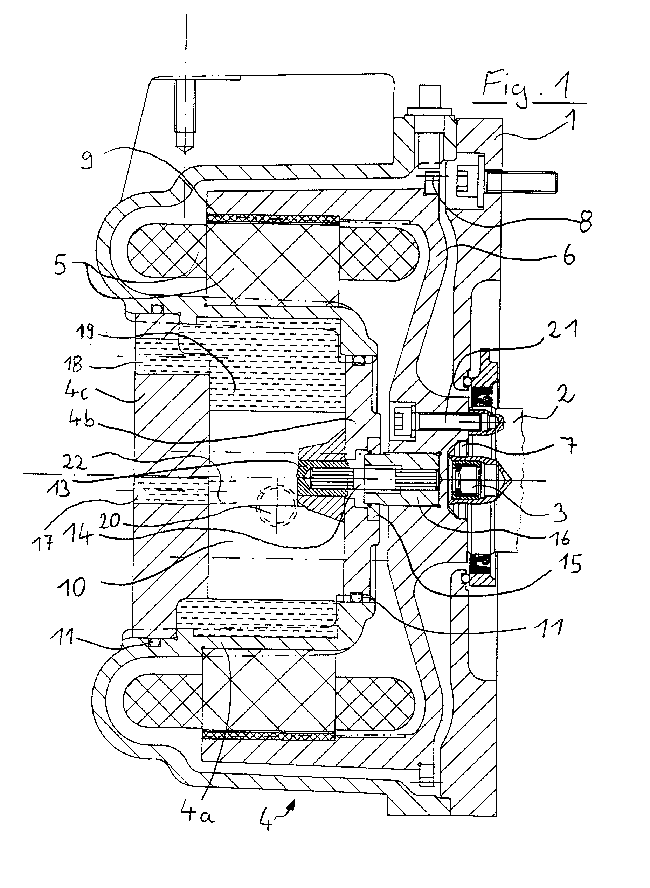

Figur 1 zeigt einen Längsschnitt durch eine erfindungsgemäße Baueinheit aus Verbrennungsmotor, Generator und Pumpenaggregat. Bei dem nicht vollständig dargestellten Verbrennungsmotor handelt es sich um einen Motor herkömmlicher Bauart, wie er beispielsweise in Personenkraftwagen oder Nutzfahrzeugen Verwendung findet. Abgebildet ist ein Gehäuseteil 1 des Verbrennungsmotors sowie dessen Kurbelwelle 2. In die Kurbelwelle ist standardgemäß eine Lagerstelle 3 eingearbeitet, die für die vorliegende Baueinheit jedoch ohne Verwendung bleibt. Das Gehäuseteil 1 des Verbrennungsmotors kann von einem Zwischenflansch gebildet werden, der an dem eigentlichen Motorgehäuse befestigt ist.

Ein Generatorgehäuse 4 ist an dem Gehäuseteil 1 des Verbrennungsmotors in einer definierten Lage befestigt. Das Generatorgehäuse 4 ist topfförmig ausgebildet und weist eine zentrale Einbuchtung 4a auf. Im Bereich dieser Einbuchtung 4a ist im Inneren des Generatorgehäuses 4 eine Statorwicklung 5 des Generators befestigt.

An der Kurbelwelle 2 des Verbrennungsmotors ist mit Befestigungsschrauben 21 ein Läufer 6 des Generators befestigt. Der als Außenläufer ausgebildete Läufer 6 ist auf einem aus der Kurbelwelle 2 ausgebildeten Zapfen 7 zentriert und bildet gleichzeitig ein Schwungrad für den Verbrennungsmotor. Ein Anlasserzahnkranz 8 des Verbrennungsmotors ist an dem Läufer 6 befestigt. An dem Läufer 6 sind weiterhin Dauermagnetpole 9 des Generators angeordnet. Zwischen den Dauermagnetpolen 9 und der Ständerwicklung 5 ist ein Luftspalt vorgesehen. Der Luftspalt ist derart bemessen, daß geringfügige radiale Bewegungen und Winkelverschiebungen der Kurbelwelle 2, wie sich im Betrieb des Verbrennungsmotors regelmäßig auftreten und bei der vorliegenden Anordnung direkt auf den Läufer 6 direkt übertragen werden, in keinem Fall zu einer Kollision der Dauermagnetpole 9 mit der Statorwicklung 5 führen.

Erfindungsgemäß ist innerhalb der Einbuchtung 4a ein Pumpenaggregat 10, in diesem Ausführungsbeispiel eine Hydraulikpumpe, angeordnet. Hierbei können handelsübliche Pumpenaggregate, beispielsweise Zahnradpumpen, verwendet werden. Das Generatorgehäuse 4 weist einen verbrennungsmotorseitigen Deckel 4b und einen weiteren, auf der gegenüberliegenden Seite angeordneten Deckel 4c auf. Die Deckel 4b, 4c, sind gegenüber der Einbuchtung 4a mit O-Ringen 11 abgedichtet.

Der verbrennungsmotorseitige Deckel 4b weist eine Durchbrechung auf, durch welche eine Eingangswelle 13 des Pumpenaggregats 10 über eine Zwischenwelle 14 mit dem Läufer 6 verbunden ist. Die Zwischenwelle 14 weist an beiden Enden, zur Übertragung der Drehbewegung eine Längsverzahnung auf. Diese Längsverzahnung ist mit Spiel behaftet, womit die beschriebenen Lagetoleranzen der Kurbelwelle 2 nicht auf die Eingangswelle 13 des Pumpenaggregats 10 übertragen werden. Die Drehbewegung des mit der Kurbelwelle 2 verbundenen Läufers wird somit zum Pumpenaggregat 10 übertragen. Der Deckel 4b ist gegenüber einer in den Läufer 6 eingesetzten Buchse 16 mit einem geeigneten Wellendichtring 15 abgedichtet.

Aus dem Deckel 4c ist ein Druckanschluß 17 und ein Sauganschluß 18 ausgearbeitet. Der Druckanschluß 17 geht direkt in eine Drucköffnung 22 des Pumpenaggregats 10 über. Der Sauganschluß 18 mündet in einen zwischen den Deckeln 4a, 4b vorhandenen Leerraum 19, der mit der von dem Pumpenaggregat geförderten Flüssigkeit gefüllt ist. Aus diesem Leerraum 19 saugt das Pumpenaggregat 10 durch eine Saugöffnung 20 Flüssigkeit an.

Durch die Anordnung des Pumpenaggregats 19 und die erfindungsgemäße Führung der geförderten Flüssigkeit wird die Wandung der Einbuchtung 4a des Generatorgehäuses 4 mit Flüssigkeit angeströmt. Wärmeenergie wird somit mit der strömenden Flüssigkeit durch die Wandung der Einbuchtung 4a aus der Ständerwicklung 5 abgeführt. Ein Überhitzen der Ständerwicklung und damit des gesamten Generators wird somit sicher verhindert. Um einen definierten Flüssigkeitsstrom zur erhalten, können in dem Leerraum 19 beispielsweise Strömungsleitbleche oder Turbulatoren angeordnet werden. Die beschriebenen Anordnung bietet den weiteren Vorteil, daß die Verzahnungen der Zwischenwelle 14 mit Flüssigkeit geflutet sind, womit eine ausreichende Schmierung der Zwischenwelle 14 sichergestellt ist.

Das Generatorgehäuse 4 ist derart gestaltet, daß bei demontierten Deckeln 4b, 4c und demontiertem Pumpenaggregat 10 die Befestigungsschrauben 21 für den Läufer 6 an der Kurbelwelle 2 gut zugänglich sind. Der Generator kann somit komplett, d.h. als vormontierte Baueinheit aus Statorgehäuse, Statorwicklung 5 und Läufer 6, mit dem Verbrennungsmotor verbunden werden.

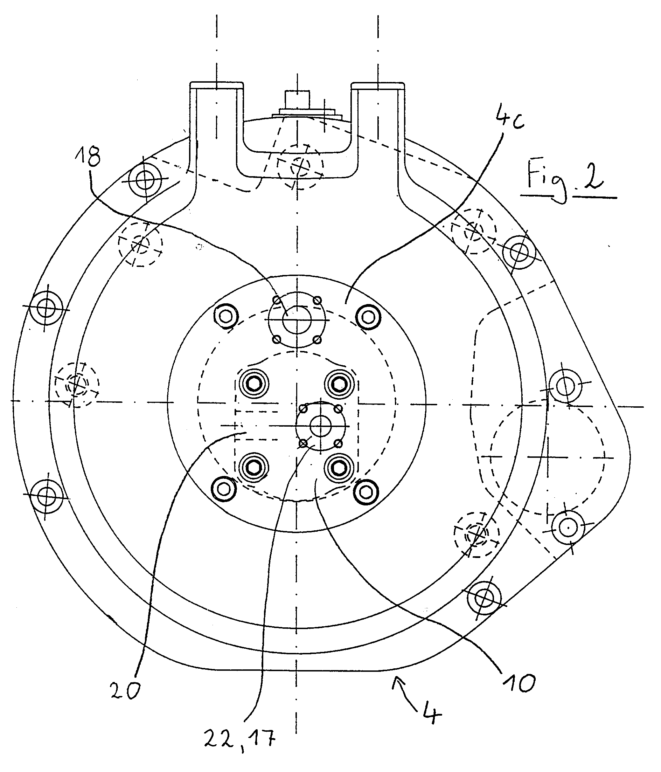

Figur 2 zeigt die erfindungsgemäße Baueinheit mit Blick von der Pumpenseite. Zu erkennen ist in dieser Darstellung insbesondere die Anordnung des Sauganschlusses 18 und des Druckanschlusses 17 an dem Deckel 4c, sowie die Saugöffnung 20 und die Drucköffnung 22 des Pumpenaggregats 10.

## Patentansprüche

1. Baueinheit aus einem Verbrennungsmotor, einem mittels des Verbrennungsmotors antreibbaren elektrischen Generator und einem mittels des Verbrennungsmotors antreibbaren Pumpenaggregat, **dadurch gekennzeichnet**, daß das Generatorgehäuse (4) derart gestaltet ist und das Pumpenaggregat (10) derart an dem Generatorgehäuse (4) angeordnet ist, daß ein mittels des Pumpenaggregats (10) erzeugter Flüssigkeitsstrom einen Kühlmittelstrom für den Generator darstellt, wobei Kanäle und/oder Leitungen, die das Pumpenaggregat (10) mit dem Generatorgehäuse (4) verbinden, zumindest teilweise innerhalb des Generatorgehäuses (4) angeordnet sind.

2. Baueinheit nach Anspruch 1, dadurch gekennzeichnet, daß das Pumpenaggregat (10) zumindest teilweise innerhalb eines Generatorgehäuses (4) angeordnet ist.

3. Baueinheit nach Anspruch 1 oder 2, dadurch gekennzeichnet, daß die Kanäle und/oder Leitungen, die das Pumpenaggregat (10) mit dem Generatorgehäuse (4) verbinden, vollständig innerhalb des Generatorgehäuses (4) angeordnet sind.

4. Baueinheit nach einem der Ansprüche 1 bis 3, dadurch gekennzeichnet, daß das Pumpenaggregat (10) als Hydraulikpumpe ausgebildet ist und als Kühlmittel Hydrauliköl vorgesehen ist.

5. Baueinheit nach einem der Ansprüche 1 bis 4, dadurch gekennzeichnet, daß das Pumpenaggregat (10) in einer Einbuchtung (4a) des Generatorgehäuses (4) angeordnet ist.

6. Baueinheit nach Anspruch 5, dadurch gekennzeichnet, daß das Generatorgehäuse (4) einen Deckel (4b) aufweist, der die Einbuchtung (4a) des Generatorgehäuses (4) verbrennungsmotorseitig flüssigkeitsdicht abschließt.

7. Baueinheit nach Anspruch 5 oder 6, dadurch gekennzeichnet, daß das Generatorgehäuse (4) einen Deckel (4c) aufweist, der die Einbuchtung (4a) des Generatorgehäuses (4) auf der dem Verbrennungsmotor entgegengesetzten Seite flüssigkeitsdicht abschließt.

8. Baueinheit nach einem der Ansprüche 5 bis 7, dadurch gekennzeichnet, daß das Pumpenaggregat (10) innerhalb der Einbuchtung (4a) des Generatorgehäuses (4) angeordnet ist und der innerhalb der Einbuchtung (4a) vorhandene Leerraum (19) von dem Flüssigkeitsstrom durchströmt wird.

9. Baueinheit nach Anspruch 7 oder 8, dadurch gekennzeichnet, daß der auf der dem Verbrennungsmotor entgegengesetzten Seite angeordnete Deckel (4c) einen Sauganschluß (18) und einen Druckanschluß (17) für den mit dem Pumpenaggregat (10) erzeugten Flüssigkeitsstrom aufweist.

10. Baueinheit nach einem der Ansprüche 7 bis 9, dadurch gekennzeichnet, daß der an dem Deckel (4c) befindliche Druckanschluß (17) direkt in eine Drucköffnung (22) des Pumpenaggregats (10) mündet.

11. Baueinheit nach einem der Ansprüche 7 bis 10, dadurch gekennzeichnet, daß der an dem Deckel (4c) befindliche Sauganschluß (18) in den zwischen den beiden Deckeln (4b, 4c) befindlichen Leerraum (19) mündet.

12. Baueinheit nach einem der Ansprüche 8 bis 11, dadurch gekennzeichnet, daß in dem Leerraum Mittel zum Leiten der Richtung des Flüssigkeitsstroms angeordnet sind.

13. Baueinheit nach einem der Ansprüche 1 bis 12, dadurch gekennzeichnet, daß ein die Drehbewegung einer Kurbelwelle (2) des Verbrennungsmotors auf eine Eingangswelle (13) des Pumpenaggregats (10) übertragendes Verbindungsstück vorgesehen ist.

14. Baueinheit nach Anspruch 13, dadurch gekennzeichnet, daß das Verbindungsstück mit Mitteln zum Ausgleichen von radialen und/oder axialen Toleranzen und/oder von Winkelverschiebungen versehen ist.

15. Baueinheit nach Anspruch 13 oder 14, dadurch gekennzeichnet, daß das Verbindungsstück als Zwischenwelle (14) ausgebildet ist, die beidseitig mit axialem und radialem Spiel gelagert ist.

16. Baueinheit nach Anspruch 15, dadurch gekennzeichnet, daß die Lagerstellen der Zwischenwelle mit der von dem Pumpenaggregat (10) geförderten Flüssigkeit geflutet sind.

17. Baueinheit nach einem der Ansprüche 1 bis 16, dadurch gekennzeichnet, daß nach einem Entfernen der die Einbuchtung (4a) abschließenden Deckel (4b, 4c) und des Pumpenaggregats (10), Befestigungselemente für einen Läufer (6) des Generators an einer Kurbelwelle (2) des Verbrennungsmotors, durch die Einbuchtung (4a) hindurch zugänglich sind.

18. Baueinheit nach einem der Ansprüche 1 bis 17, dadurch gekennzeichnet, daß der Generator als Außenläufer-Generator ausgebildet ist.

19. Baueinheit nach einem der Ansprüche 1 bis 18, dadurch gekennzeichnet, daß eine Statorwicklung (5) an einer Wandung des Generatorgehäuses (4) befestigt ist, deren Rückseite den mit dem Pumpenaggregat (10) erzeugten Flüssigkeitsstrom begrenzt.

20. Baueinheit nach einem der Ansprüche 1 bis 19, dadurch gekennzeichnet, daß die Statorwicklung an einer Wandung des Generatorgehäuses (4) befestigt ist, die gleichzeitig eine Wandung der Einbuchtung (4a) des Generatorgehäuses darstellt.
